# EUROPÄISCHE PATENTSCHRIFT

(11) **EP 3 704 929 B1**
(45) Veröffentlichungstag und Bekanntmachung des Hinweises auf die Patenterteilung: **07.02.2024**
(21) Anmeldenummer: 19214383.2
(22) Anmeldetag: 09.12.2019
(51) Int. Cl.: A01D 41/12

(54) **HÄCKSEL- UND VERTEILVORRICHTUNG**
SHREDDER AND DISTRIBUTION DEVICE
DISPOSITIF DE HACHAGE ET DE DISTRIBUTION

(30) Priorität: 08.03.2019 DE 102019105952
(43) Veröffentlichungstag der Anmeldung: 09.09.2020
(73) Patentinhaber: CLAAS Selbstfahrende Erntemaschinen GmbH, 33428 Harsewinkel (DE)
(72) Erfinder: Beulke, Christian, 37589 Echte (DE); Heinze, Matthias, 33609 Bielefeld (DE); Amsbeck, Dieter, 33428 Harsewinkel (DE); Vieregge, Christopher, 32694 Dörentrup (DE)
(74) Vertreter: CLAAS Gruppe

(56) Entgegenhaltungen:
- EP-A1- 1 269 822
- EP-A2- 1 514 466
- US-A1- 2009 325 659

## Beschreibung

Die vorliegende Erfindung betrifft eine Häcksel- und Verteilvorrichtung, umfassend einen Strohhäcksler sowie eine dem Strohhäcksler nachgeordnete Verteileinrichtung, welche zwei nebeneinander angeordnete Wurfgebläse umfasst, die jeweils einen um eine senkrechte Achse rotierenden Läufer aufweisen, die im Betrieb gegensinnig rotieren, wobei jedes Wurfgebläse einen dem Strohhäcksler zugewandten, im Wesentlichen kreisbogenförmigen Guteintrittsbereich und einen dem Strohhäcksler abgewandten Gutaustrittsbereich aufweist, wobei zwischen den Wurfgebläsen ein Leitelement angeordnet ist, welches sich abschnittsweise in Längsrichtung der Verteileinrichtung erstreckt.

Aus der EP 2 250 869 B1 und EP 1 514 466 ist eine Häcksel- und Verteilvorrichtung der eingangs genannte Art bekannt. Die Häcksel- und Verteilvorrichtung umfasst einen Strohhäcksler sowie eine dem Strohhäcksler nachgeordnete Verteileinrichtung, welche zwei nebeneinander angeordnete Wurfgebläse umfasst. Die Wurfgebläse weisen jeweils einen um eine senkrechte Achse rotierenden Läufer auf, die im Betrieb der Verteileinrichtung gegensinnig rotieren, wobei ein Läufer im Uhrzeigersinn und der andere Läufer im Gegenuhrzeigersinn rotieren, so dass von dem Strohhäcksler an die Verteileinrichtung übergebenes Erntegut sowie ein von den Läufern erzeugter Luftstrom teilweise von den Läufern aufeinander zu befördert wird. Jedes Wurfgebläse weist einen dem Strohhäcksler zugewandten, im Wesentlichen kreisbogenförmigen Guteintrittsbereich und einen dem Strohhäcksler abgewandten Gutaustrittsbereich auf. Zwischen den Wurfgebläsen ist ein Leitelement angeordnet, welches sich abschnittsweise in Längsrichtung der Verteileinrichtung erstreckt. Das Leitelement dient dazu, die Verteilung des Erntegutes, gehäckseltes Stroh und Spreu, zwischen den Wurfgebläsen zu verbessern. Das von den Läufern aufeinander zu beförderte Erntegut sowie die anteiligen Luftströme werden dabei auch gegen das zwischen den Wurfgebläsen angeordnete Leitelement gefördert. Hierdurch erfahren das Erntegut und die Luftströme eine Ablenkung quer zu und auch entgegen der Zuführrichtung des Erntegutes durch die Häckselvorrichtung. Diese Ablenkung des Erntegutes sowie der anteiligen Luftströme kann zu Gutflussproblemen im Gutübergangsbereich zwischen dem Strohhäcksler und der Verteileinrichtung führen.

Der vorliegenden Erfindung liegt somit die Aufgabe zugrunde eine Häcksel- und Verteilvorrichtung derart weiterzubilden, dass die aus dem Standes der Technik bekannten Nachteile vermieden werden, insbesondere das Auftreten von Gutflussproblemen im Gutübergangsbereich zwischen dem Strohhäcksler und der Verteileinrichtung zumindest zu minimieren.

Diese Aufgabe wird erfindungsgemäß durch eine Häcksel- und Verteilvorrichtung gemäß den Merkmalen des Anspruches 1 gelöst. Weiterhin wird diese Aufgabe durch einen Mähdrescher mit einer Häcksel- und Verteilvorrichtung gemäß den Merkmalen des Anspruches 11 gelöst.

Gemäß dem Anspruch 1 wird eine Häcksel- und Verteilvorrichtung vorgeschlagen, umfassend einen Strohhäcksler sowie eine dem Strohhäcksler nachgeordnete Verteileinrichtung, welche zwei nebeneinander angeordnete Wurfgebläse umfasst, die jeweils einen um eine senkrechte Achse rotierenden Läufer aufweisen, die im Betrieb gegensinnig rotieren, wobei jedes Wurfgebläse einen dem Strohhäcksler zugewandten, im Wesentlichen kreisbogenförmigen Guteintrittsbereich und einen dem Strohhäcksler abgewandten Gutaustrittsbereich aufweist, wobei zwischen den Wurfgebläsen ein Leitelement angeordnet ist, welches sich abschnittsweise in Längsrichtung der Verteileinrichtung erstreckt. Um das Auftreten von Gutflussproblemen im Gutübergangsbereich zwischen der Häckselvorrichtung und der Verteileinrichtung zumindest zu minimieren, ist erfindungsgemäß vorgesehen, dass das Leitelement im Guteintrittsbereich der Wurfgebläse einen ersten im Wesentlichen keilförmigen Leitabschnitt aufweist, der sich ausgehend vom Guteintrittsbereich in Längsrichtung des Leitelementes bis zu einem Übergangsbereich aufweitet, und dass das Leitelement einen zweiten im Wesentlichen keilförmigen Leitabschnitt aufweist, der sich ausgehend von dem Übergangsbereich in Richtung des Gutaustrittsbereiches verjüngt, wobei der Übergangsbereich des Leitelementes im Abstand zu den senkrechten Achsen in einer zur Längsachse des Leitelementes quer verlaufenden gedachten Ebene angeordnet ist und der Abstand der gedachten Ebene zu den senkrechten Achsen zumindest dem Radius der Läufer entspricht. Der Abstand der gedachten Ebene, in welcher der Übergangsbereich des Leitelementes zwischen dem ersten Leitabschnitt und dem zweiten Leitabschnitt angeordnet ist, zu den senkrechten Achsen der Läufer ist so groß, dass die gedachte Ebene die Guteintrittsbereiche der Wurfgebläse höchstens tangiert. Der Abstand der Ebene zu den senkrechten Achsen, in Längsrichtung der Verteileinrichtung gesehen, entspricht somit zumindest dem Radius der Läufer. Indem der Übergangsbereich des Leitelementes vor einem Auftreffpunkt des Erntegutes auf dem Leitelement angeordnet ist, trifft das von den Läufern kommende Erntegut seitlich auf den zweiten Leitabschnitt, der sich in Richtung des Gutaustrittsbereichs verjüngt. Durch die im Wesentlichen keilförmige Geometrie des zweiten Leitabschnittes erfährt das auf diesen auftreffende Erntegut eine Ablenkung in Richtung des Gutaustrittsbereichs. Die Ausfallrichtung des Erntegutes wird von dem keilförmigen zweiten Leitabschnitt in die von der Verteileinrichtung weg gerichtet, wodurch ein dem Erntegutstrom entgegengesetzter Gutfluss verhindert wird. Mittels des ersten im Wesentlichen keilförmigen Leitabschnittes, der sich oberhalb der Ebene befindet, wird das von der Häckselvorrichtung zugeführte Erntegut quer zur Längsrichtung der Verteileinrichtung in Richtung auf die Guteintrittsbereiche der Läufer der Wurfgebläse abgelenkt.

Bevorzugt kann das Leitelement im Übergangsbereich seine größte Ausdehnung quer zur Längsachse des Leitelementes aufweisen. Hierdurch kann eine Ablenkung des seitlich auf den zweiten Leitabschnitt aufprallenden Erntegutes entgegen der Förderrichtung des von dem Strohhäcksler kommenden Gutstroms vermieden werden.

Insbesondere kann der erste Leitabschnitt paarweise angeordnete Gutleitschenkel aufweisen, die in einer dem Strohhäcksler zugewandten Spitze zusammenlaufen. Hierdurch wird der vom Strohhäcksler kommende Gutstrom aufgeteilt und in Richtung der Wurfgebläse abgelenkt.

Weiterhin kann der zweite Leitabschnitt paarweise angeordnete Gutleitschenkel aufweisen, die in Richtung des Gutaustrittsbereiches aufeinander zu laufen. Im Unterschied zu den beiden Gutleitschenkeln des ersten Leitabschnittes weisen die beiden Gutleitschenkel des zweiten Leitabschnittes einen Schnittpunkt im unendlichen auf, d.h. dass sich die Enden der Gutleitschenkel nicht in einem gemeinsamen Punkt treffen.

Dabei können sich die Gutleitschenkel des zweiten Leitabschnittes in Längsrichtung der Verteileinrichtung zumindest bis auf Höhe der senkrechten Achsen erstrecken. D.h., die Gutleitschenkel des zweiten Leitabschnittes weisen eine Länge auf, die zumindest dem Abstand zwischen der gedachten Ebene in dem Guteintrittsbereich und der jeweiligen senkrechten Achse der Läufer entspricht. Hierdurch kann eine ungewollte frühzeitige Überlappung der von den gegensinnig rotierenden Wurfgebläsen kommenden Gutströme im Mittenbereich zwischen den Wurfgebläsen verhindert werden.

Bevorzugt kann der erste Leitabschnitt zwischen seinen Gutleitschenkeln einen ersten Winkel einschließen. Durch die Auswahl des ersten Winkels wird die Ablenkung des von dem Strohhäcksler kommenden Gutstroms seitlich nach außen in Richtung des jeweiligen Läufers vorgegeben.

Weiter bevorzugt kann der zweite Leitabschnitt zwischen seinen Gutleitschenkeln einen zweiten Winkel einschließen. Durch die Auswahl des zweiten Winkels wird die Ablenkung der von den gegensinnig rotierenden Wurfgebläsen kommenden Gutströme im Mittenbereich vorgegeben, welche den Austrag des Erntegutes auf dem Boden im Mittenbereich zwischen den Wurfgebläsen beeinflusst.

Besonders bevorzugt kann der erste Winkel größer als der zweite Winkel sein.

Vorzugsweise kann der erste Leitabschnitt im Wesentlichen die Form eines gleichseitigen Dreiecks und der zweite Leitabschnitt im Wesentlichen die Form eines Trapezes aufweisen.

Insbesondere können die Gutleitschenkel des zweiten Leitabschnitts in Längsrichtung der Verteileinrichtung eine Krümmung mit einem konkaven Verlauf aufweisen.

Weiterhin wird die eingangs gestellte Aufgabe durch einen Mähdrescher gemäß dem Anspruch 11 gelöst. Der Mähdrescher weist hierzu eine erfindungsgemäß ausgebildete Häcksel- und Verteilvorrichtung auf.

Die vorliegende Erfindung wird nachstehend anhand eines in den Zeichnungen dargestellten Ausführungsbeispieles näher erläutert.

Es zeigen:
- Fig. 1: eine schematische Darstellung eines hinteren Teils eines Mähdreschers;
- Fig. 2: eine schematische Darstellung einer Häcksel- und Verteilvorrichtung des Mähdreschers in einer Ansicht von oben; und
- Fig. 3: eine vereinfachte schematische Darstellung von Läufern und einem zwischen den Läufern angeordneten Leitelement einer Verteileinrichtung in Draufsicht;
- Fig. 4: eine schematische Darstellung des Leitelementes in einer Ansicht von oben.

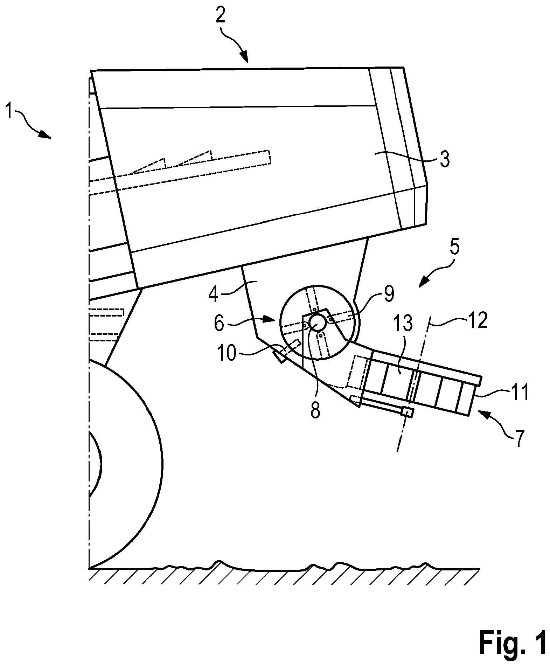

In Fig. 1 ist eine schematische Darstellung eines hinteren Teils eines Mähdreschers 1 gezeigt. Mit 2 ist der hintere Teil eines Mähdreschers 1 bezeichnet, mit einer Strohausfallhaube 3, an die sich ein Häckslergehäuse 4 anschließt. Im hinteren Teil 2 befindet sich eine Häcksel- und Verteilvorrichtung 5. Die Häcksel- und Verteilvorrichtung 5 weist einen Strohhäcksler 6 sowie eine dem Strohhäcksler 6 nachgeordnete Verteileinrichtung 7 auf. In dem Häckslergehäuse 4 ist der Strohhäcksler 6 angeordnet. Der Strohhäcksler 6 umfasst eine in dem Häckslergehäuse 4 rotierend antreibbar gelagerte Welle 8, die mit schwenkbaren Häckselmessern 9 besetzt ist. Die Häckselmesser 9 kämmen mit Gegenmessern 10.

Die Verteileinrichtung 7 umfasst zwei nebeneinander angeordnete Wurfgebläse 11, die jeweils einen um eine senkrechte Achse 12 rotierenden Läufer 13 aufweisen, die im Betrieb gegensinnig rotieren. In der Seitenansicht gemäß Fig. 1 ist nur das vordere Wurfgebläse 11 sichtbar. Während das in Fig. 1 dargestellte vordere Wurfgebläse 11 im Uhrzeigersinn rotiert, rotiert das hintere Wurfgebläse 11 im Gegenuhrzeigersinn. Hierdurch wird ausgehend von einem Mittenbereich einer Verteilung des gehäckselten Erntegutes über die durch ein am Mähdrescher 1 angeordnetes Vorsatzgerät vorgegebene Arbeitsbreite erreicht.

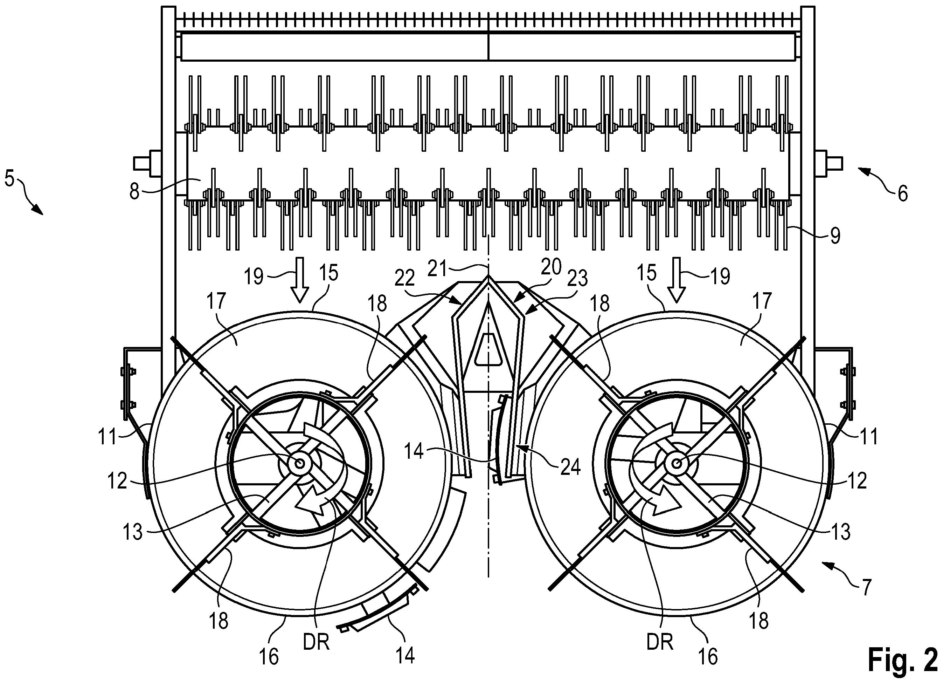

Fig. 2 zeigt eine schematische Darstellung der Häcksel- und Verteilvorrichtung 5 des Mähdreschers 1 in einer Ansicht von oben. Jedes Wurfgebläse 11 weist einen dem Strohhäcksler 6 zugewandten, im Wesentlichen kreisbogenförmigen Guteintrittsbereich 15 auf. Dem Guteintrittsbereich 15 gegenüberliegend befindet sich jeweils ein dem Strohhäcksler 6 abgewandter Gutaustrittsbereich 16. Die Läufer 13 rotieren gegensinnig in durch einen Pfeil DR veranschaulichte Drehrichtungen. Die Läufer 13 sind mit mehreren radial orientierten Schaufeln 18 oder Paddeln versehen, die von einer kreisrunden Grundplatte 17 des Läufers 13 vertikal aufragen. Die jeweilige Grundplatte 17 ist auf einem Teil ihres Umfangs von starren Wänden sowie von einem Wandabschnitt 14 begrenzt, der, gesteuert durch ein Stellglied, um zur senkrechten Achse 12 des Läufers 13 parallele Achse schwenkbar ist und so einen beweglichen Gutaustrittsbereich 16 definiert.

Das von dem Strohhäcksler 6 kommende, zerkleinerte Erntegut wird in Förderrichtung 19 an die Läufer 13 der Verteileinrichtung 7 übergeben. Zwischen den Läufern 13 ist ein Leitelement 20 angeordnet ist, welches sich abschnittsweise in Längsrichtung der Verteileinrichtung 7 erstreckt. In vertikaler Richtung, d.h. senkrecht zur Blattebene, weist das Leitelement 20 eine Ausdehnung aus, die im Wesentlichen zumindest der Höhe der Läufer 13 entspricht.

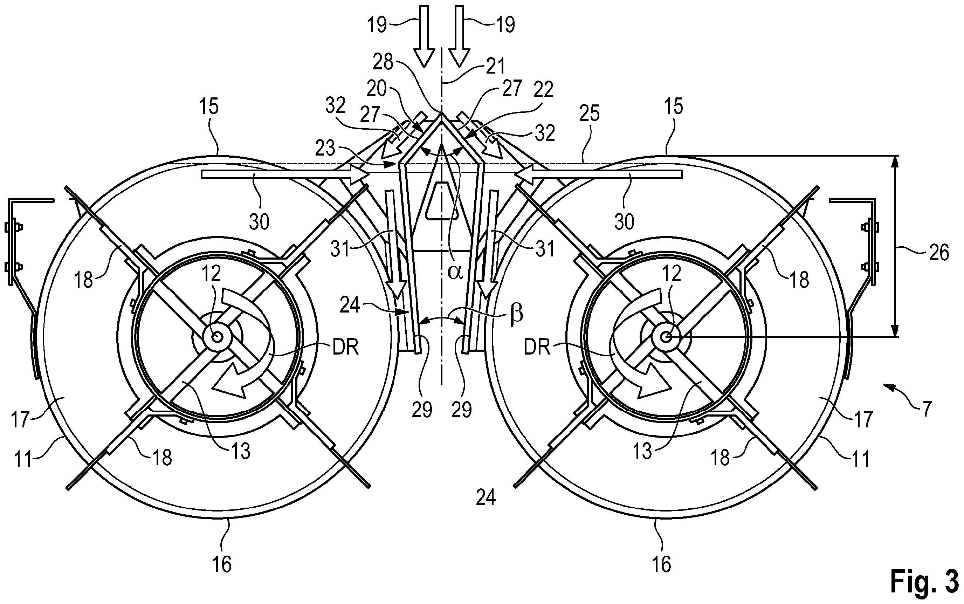

Fig. 3 zeigt eine vereinfachte schematische Darstellung der Läufer 13 und des zwischen den Läufern 13 angeordneten Leitelementes 20 der Verteileinrichtung 7 in einer Draufsicht. Das Leitelement 20 weist oberhalb des Guteintrittsbereiches 15 der Wurfgebläse 11 einen ersten im Wesentlichen keilförmigen Leitabschnitt 22 auf, der sich ausgehend vom Guteintrittsbereich 15 in Längsrichtung des Leitelementes 20 bis zu einem Übergangsbereich 23 aufweitet. Der erste Leitabschnitt 22 ist zur Längsachse 21 des Leitelementes 20 symmetrisch ausgebildet. Der erste Leitabschnitt 22 ist dem Strohhäcksler 6 zugewandt.

Weiterhin weist das Leitelement 20 einen zweiten im Wesentlichen keilförmigen Leitabschnitt 24 auf, der sich ausgehend von dem Übergangsbereich 23 in Richtung des Gutaustrittsbereiches 16 der Wurfgebläse 11 verjüngt. Auch der zweite Leitabschnitt 24 ist zur Längsachse 21 des Leitelementes 20 symmetrisch ausgebildet. Der Übergangsbereich 23 des Leitelementes 20 ist in einem Abstand 26 zu den senkrechten Achsen 12 in einer zu der Längsachse 21 des Leitelementes 20 quer verlaufenden gedachten Ebene 25 angeordnet. Der Abstand 26 der gedachten Ebene 25 zu den senkrechten Achsen 12 entspricht zumindest dem Radius der Läufer 13. Das Leitelement 20 ist bevorzugt als ein Hohlprofilbauteil, insbesondere aus einem Metall, ausgeführt.

Der erste Leitabschnitt 22 weist paarweise angeordnete Gutleitschenkel 27 auf, die ausgehend von dem Übergangsbereich 23 in einer dem Strohhäcksler 6 zugewandten Spitze 28 zusammenlaufen. Der zweite Leitabschnitt 24 weist paarweise angeordnete Gutleitschenkel 29 auf, die ausgehend von Übergangsbereich 23 in Richtung des Gutaustrittsbereiches 16 aufeinander zu laufen. Das Leitelement 20 weist in dem Übergangsbereich 23 seine größte Ausdehnung quer zur Längsachse 21 des Leitelements 20 auf. Die Gutleitschenkel 29 des zweiten Leitabschnittes 24 erstrecken sich in Längsrichtung der Verteileinrichtung 7 zumindest bis auf Höhe der senkrechten Achsen 12.

Der erste Leitabschnitt 22 schließt zwischen seinen Gutleitschenkeln 27 einen ersten Winkel α ein. Der zweite Leitabschnitt 24 schließt zwischen seinen Gutleitschenkeln 29 einen zweiten Winkel β ein. Der erste Winkel α ist größer als der zweite Winkel β. Bevorzugt können, bezogen auf die Längsachse 21, der erste Leitabschnitt 22 im Wesentlichen die Form eines gleichseitigen Dreiecks und der zweite Leitabschnitt 24 im Wesentlichen die Form eines Trapezes aufweisen.

Bei der Zuführung des von dem Strohhäcksler 6 kommenden Erntegutes erfährt das Erntegut beim Eintritt durch die Guteintrittsbereiche 15 des jeweiligen Wurfgebläses 11 anteilig eine der Drehrichtung DR entsprechende in Richtung des Leitelementes 20 gerichtete Ablenkung (Pfeil 30), wodurch das Erntegut gegen das Leitelement 20 geschleudert wird. Dabei trifft es im Wesentlichen vollständig unterhalb des Übergangsbereiches 23 auf den jeweiligen dem Wurfgebläse 11 zugewandten Gutleitschenkel 29 des zweiten Leitabschnitts 24 auf. Durch die nach innen gerichtete Neigung der Gutleitschenkel 29 des zweiten Leitabschnitts 24 wird das Erntegut in Längsrichtung der Verteilvorrichtung 7 abgelenkt, wie durch Richtungspfeile 31 veranschaulicht.

Vom Strohhäcksler 6 kommendes Erntegut, veranschaulicht durch die die Förderrichtung bezeichnenden Pfeile 19, welches auf den ersten Leitabschnitt 22 auftrifft, wird von dessen Gutleitschenkeln 27 aufgrund der sich in Strömungsrichtung aufweitenden Kontur des ersten Leitabschnitts 22 in Richtung des jeweiligen Wurfgebläses 11 abgelenkt, wie durch Richtungspfeile 32 verdeutlicht wird.

Die Positionierung des Übergangsbereiches 23 zwischen dem ersten Leitabschnitt 22 und dem zweiten Leitabschnitt 24 derart, dass die gedachte Ebene 25 die beiden Guteintrittsbereiche 15 nur tangiert oder in radialer Richtung zu den senkrechten Achsen 12 weiter beabstandet ist, bewirkt, dass von dem jeweiligen Wurfgebläse 11 geförderten, auf die Gutleitschenkel 29 des zweiten Leitabschnitts 24 auftreffenden Gutstrom eine Bewegung in Richtung der Gutaustrittsbereiche 16 aufgeprägt wird. Hingegen wird der auf den ersten Leitabschnitt 22 auftreffende Gutstrom (Pfeile 19) durch die Gutleitschenkel 27 in Richtung des jeweiligen Wurfgebläses 11 abgelenkt. Somit können Gutflussstörungen vermieden oder zumindest minimiert werden.

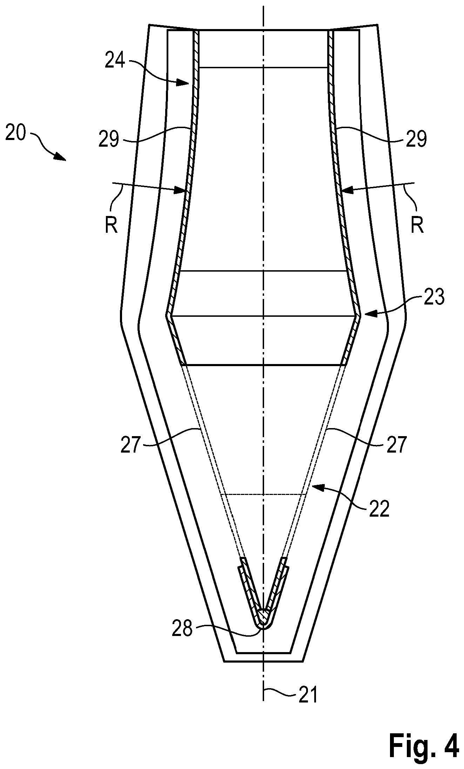

In Fig. 4 ist eine schematische Darstellung des Leitelementes 20 in einer Ansicht von oben dargestellt. Wie aus der Darstellung ersichtlich, weisen die einander gegenüberliegenden Gutleitschenkel 27 des zweiten Leitabschnittes 24 jeweils eine Krümmung R mit einem konkaven Verlauf auf. Die Krümmung R ist quer zur Längsachse 21 des Leitelementes 20 ausgebildet.

### Bezugszeichenliste

| | | | |
|---|---|---|---|
| 1 | Mähdrescher | 31 | Richtungspfeil |
| 2 | hinterer Teil von 1 | 32 | Richtungspfeil |
| 3 | Strohausfallhaube | | |
| 4 | Häckslergehäuse | α | Erster Winkel von 22 |
| 5 | Häcksel- und Verteilvorrichtung | β | Zweiter Winkel von 24 |
| 6 | Strohhäcksler | DR | Drehrichtung von 13 |
| 7 | Verteileinrichtung | R | Krümmung von 29 |
| 8 | Welle | | |
| 9 | Häckselmesser | | |
| 10 | Gegenmesser | | |
| 11 | Wurfgebläse | | |
| 12 | Senkrechte Achse | | |
| 13 | Läufer | | |
| 14 | Wandabschnitt | | |
| 15 | Guteintrittsbereich | | |
| 16 | Gutaustrittsbereich | | |
| 17 | Grundplatte | | |
| 18 | Schaufel | | |
| 19 | Förderrichtung | | |
| 20 | Leitelement | | |
| 21 | Längsachse von 20 | | |
| 22 | Erster Leitabschnitt | | |
| 23 | Übergangsbereich | | |
| 24 | Zweiter Leitabschnitt | | |
| 25 | Gedachte Ebene | | |
| 26 | Abstand | | |
| 27 | Gutleitschenkel von 22 | | |
| 28 | Spitze | | |
| 29 | Gutleitschenkel von 24 | | |
| 30 | Ablenkung | | |

## Patentansprüche

1. Häcksel- und Verteilvorrichtung (5), umfassend einen Strohhäcksler (6) sowie eine dem Strohhäcksler (6) nachgeordnete Verteileinrichtung (7), welche zwei nebeneinander angeordnete Wurfgebläse (11) umfasst, die jeweils einen um eine senkrechte Achse (12) rotierenden Läufer (13) aufweisen, die im Betrieb gegensinnig rotieren, wobei jedes Wurfgebläse (11) einen dem Strohhäcksler (6) zugewandten, im Wesentlichen kreisbogenförmigen Guteintrittsbereich (15) und einen dem Strohhäcksler (6) abgewandten Gutaustrittsbereich (16) aufweist, wobei zwischen den Wurfgebläsen (11) ein Leitelement (20) angeordnet ist, welches sich abschnittsweise in Längsrichtung der Verteilvorrichtung (7) erstreckt, **dadurch gekennzeichnet, dass** das Leitelement (20) im Guteintrittsbereich (15) der Wurfgebläse (11) einen ersten im Wesentlichen keilförmigen Leitabschnitt (22) aufweist, der sich ausgehend vom Guteintrittsbereich (15) in Längsrichtung des Leitelementes (20) bis zu einem Übergangsbereich (23) aufweitet, und dass das Leitelement (20) einen zweiten im Wesentlichen keilförmigen Leitabschnitt (24) aufweist, der sich ausgehend von dem Übergangsbereich (23) in Richtung des Gutaustrittsbereiches (16) verjüngt, wobei der Übergangsbereich (23) des Leitelementes (20) im Abstand (26) zu den senkrechten Achsen (12) in einer zur Längsachse (21) des Leitelementes (20) quer verlaufenden gedachten Ebene (25) angeordnet ist und der Abstand (26) der gedachten Ebene (25) zu den senkrechten Achsen (12) zumindest dem Radius der Läufer (13) entspricht, wobei die Läufer (13) mit mehreren radial orientierten Schaufeln (18) versehen sind, die von einer kreisrunden Grundplatte (17) des Läufers (13) vertikal aufragen.

2. Häcksel- und Verteilvorrichtung (5) nach Anspruch 1, **dadurch gekennzeichnet, dass** das Leitelement (20) im Übergangsbereich (23) seine größte Ausdehnung quer zur Längsachse (21) des Leitelementes (20) aufweist.

3. Häcksel- und Verteilvorrichtung (5) nach Anspruch 1 oder 2, **dadurch gekennzeichnet, dass** der erste Leitabschnitt (22) paarweise angeordnete Gutleitschenkel (27) aufweist, die in einer dem Strohhäcksler (6) zugewandten Spitze (28) zusammenlaufen.

4. Häcksel- und Verteilvorrichtung (5) nach Anspruch 1 bis 3, **dadurch gekennzeichnet, dass** der zweite Leitabschnitt (24) paarweise angeordnete Gutleitschenkel (29) aufweist, die in Richtung des Gutaustrittsbereiches (16) aufeinander zu laufen.

5. Häcksel- und Verteilvorrichtung (5) nach Anspruch 4, **dadurch gekennzeichnet, dass** sich die Gutleitschenkel (29) des zweiten Leitabschnittes (24) in Längsrichtung der Verteileinrichtung (7) zumindest bis auf Höhe der senkrechten Achsen (12) erstrecken.

6. Häcksel- und Verteilvorrichtung (5) nach einem der Ansprüche 3 bis 5, **dadurch gekennzeichnet, dass** der erste Leitabschnitt (22) zwischen seinen Gutleitschenkeln (27) einen ersten Winkel (α) einschließt.

7. Häcksel- und Verteilvorrichtung (5) nach einem der Ansprüche 4 bis 6, **dadurch gekennzeichnet, dass** der zweite Leitabschnitt (24) zwischen seinen Gutleitschenkeln (29) einen zweiten Winkel (β) einschließt.

8. Häcksel- und Verteilvorrichtung (5) nach Anspruch 6 und 7, **dadurch gekennzeichnet, dass** der erste Winkel (α) größer als der zweite Winkel (β) ist.

9. Häcksel- und Verteilvorrichtung (5) nach einem der vorangehenden Ansprüche, **dadurch gekennzeichnet, dass** der erste Leitabschnitt (22) im Wesentlichen die Form eines gleichseitigen Dreiecks und der zweite Leitabschnitt (24) im Wesentlichen die Form eines Trapezes aufweist.

10. Häcksel- und Verteilvorrichtung (5) nach einem der vorangehenden Ansprüche, **dadurch gekennzeichnet, dass** die Gutleitschenkel (29) des zweiten Leitabschnitts (24) eine Krümmung (R) mit einem konkaven Verlauf aufweisen.

11. Mähdrescher (1) mit einer Häcksel- und Verteilvorrichtung (5), **dadurch gekennzeichnet, dass** die Häcksel- und Verteilvorrichtung (5) nach einem der Ansprüche 1 bis 10 ausgebildet ist.

## Claims

1. Chopping and distributing device (5), comprising a straw chopper (6) and a distributing device (7) arranged downstream of the straw chopper (6), which comprises two throwing fans (11) arranged next to one another, which each have a rotor (13) rotating about a vertical axis (12), which rotate in opposite directions during operation, wherein each throwing fan (11) has a material inlet region (15) facing the straw chopper (6) and a material outlet region (16) facing away from the straw chopper (6), wherein between the throwing fans (11) there is a guide region (15) in the form of a substantially circular arc and a material outlet region (16) facing away from the straw chopper (6), essentially circular arc-shaped material inlet region (15) and a material outlet region (16) facing away from the straw chopper (6), a guide element (20) being arranged between the throwing fans (11), which extends in sections in the longitudinal direction of the distribution device (7), **characterised in that** the guide element (20) has a first essentially wedge-shaped guide section (22) in the material inlet region (15) of the throwing fans (11), which, starting from the material inlet region (15), widens in the longitudinal direction of the guide element (20) as far as a transition region (23), and **in that** the guide element (20) has a second, essentially wedge-shaped guide section (24) which, starting from the transition region (23), tapers in the direction of the material outlet region (16), wherein the transition region (23) of the guiding element (20) is arranged at a distance (26) from the vertical axes (12) in an imaginary plane (25) extending transversely to the longitudinal axis (21) of the guiding element (20) and the distance (26) of the imaginary plane (25) from the vertical axes (12) corresponds at least to the radius of the runners (13), wherein the rotors (13) are provided with a plurality of radially orientated blades (18) which project vertically from a circular base plate (17) of the rotor (13).

2. Chopping and distributing device (5) according to claim 1, **characterised in that** the guide element (20) has its greatest extension transversely to the longitudinal axis (21) of the guide element (20) in the transition region (23).

3. Chopping and distributing device (5) according to claim 1 or 2, **characterised in that** the first guide section (22) has crop guide legs (27) arranged in pairs, which converge in a tip (28) facing the straw chopper (6).

4. Chopping and distributing device (5) according to claim 1 to 3, **characterised in that** the second guide section (24) has crop guide legs (29) arranged in pairs, which run towards each other in the direction of the crop outlet region (16).

5. Chopping and distributing device (5) according to claim 4, **characterised in that** the crop guide legs (29) of the second guide section (24) extend in the longitudinal direction of the distributing device (7) at least up to the level of the vertical axes (12).

6. Chopping and distributing device (5) according to one of claims 3 to 5, **characterised in that** the first guide section (22) includes a first angle (α) between its crop guide legs (27).

7. Chopping and distributing device (5) according to one of claims 4 to 6, **characterised in that** the second guide section (24) includes a second angle (β) between its crop guide legs (29).

8. Chopping and distributing device (5) according to claims 6 and 7, **characterised in that** the first angle (α) is greater than the second angle (β).

9. Chopping and distributing device (5) according to one of the preceding claims, **characterised in that** the first guide section (22) is substantially in the shape of an equilateral triangle and the second guide section (24) is substantially in the shape of a trapezoid.

10. Chopping and distributing device (5) according to one of the preceding claims, **characterised in that** the crop guide legs (29) of the second guide section (24) have a curvature (R) with a concave course.

11. Combine harvester (1) with a chopping and distributing device (5), **characterised in that** the chopping and distributing device (5) is designed according to one of claims 1 to 10.

## Revendications

1. Dispositif de hachage et d'éparpillage (5), incluant un hache-paille (6) ainsi qu'un équipement d'éparpillage (7) qui est disposé en aval du hache-paille (6) et qui inclut deux projecteurs soufflants (11), lesquels sont disposés l'un à côté de l'autre et comportent respectivement un rotor (13) tournant autour d'un axe vertical (12), lesquels rotors tournent en sens contraire lors du fonctionnement, chaque projecteur soufflant (11) comportant une zone d'entrée de produit (15) sensiblement en forme d'arc de cercle, tournée vers le hache-paille (6), et une zone de sortie de produit (16) située à l'opposé du hache-paille (6), entre les projecteurs soufflants (11) étant disposé un élément de guidage (20) qui s'étend par portions dans la direction longitudinale du dispositif d'éparpillage (7), **caractérisé en ce que** l'élément de guidage (20) comporte, dans la zone d'entrée de produit (15) des projecteurs soufflants (11), une première portion de guidage (22) sensiblement en forme de coin qui, à partir de la zone d'entrée de produit (15), s'élargit dans la direction longitudinale de l'élément de guidage (20) jusqu'à une zone de transition (23), et **en ce que** l'élément de guidage (20) comporte une deuxième portion de guidage (24) sensiblement en forme de coin qui se rétrécit à partir de la zone de transition (23) en direction de la zone de sortie de produit (16), la zone de transition (23) de l'élément de guidage (20) étant disposée à une distance (26) des axes verticaux (12) dans un plan imaginaire (25) s'étendant transversalement à l'axe longitudinal (21) de l'élément de guidage (20), et la distance (26) du plan imaginaire (25) aux axes verticaux (12) correspondant au moins au rayon des rotors (13), les rotors (13) étant munis de plusieurs pales orientées radialement (18) qui dépassent verticalement d'une plaque de base circulaire (17) du rotor (13.

2. Dispositif de hachage et d'éparpillage (5) selon la revendication 1, **caractérisé en ce que** l'élément de guidage (20) présente sa plus grande extension, transversalement à l'axe longitudinal (21) de l'élément de guidage (20), dans la zone de transition (23).

3. Dispositif de hachage et d'éparpillage (5) selon la revendication 1 ou 2, **caractérisé en ce que** la première portion de guidage (22) comporte des branches de guidage de produit (27) qui sont disposées en paire et qui convergent jusqu'à une pointe (28) tournée vers le hache-paille (6).

4. Dispositif de hachage et d'éparpillage (5) selon la revendication 1 à 3, **caractérisé en ce que** la deuxième portion de guidage (24) comporte des branches de guidage de produit (29) qui sont disposées en paire et qui s'étendent l'une vers l'autre en direction de la zone de sortie de produit (16).

5. Dispositif de hachage et d'éparpillage (5) selon la revendication 4, **caractérisé en ce que** les branches de guidage de produit (29) de la deuxième portion de guidage (24) s'étendent dans la direction longitudinale de l'équipement d'éparpillage (7) au moins jusqu'à hauteur des axes verticaux (12).

6. Dispositif de hachage et d'éparpillage (5) selon une des revendications 3 à 5, **caractérisé en ce que** la première portion de guidage (22) comprend entre ses branches de guidage de produit (27) un premier angle (α).

7. Dispositif de hachage et d'éparpillage (5) selon une des revendications 4 à 6, **caractérisé en ce que** la deuxième portion de guidage (24) comprend entre ses branches de guidage de produit (29) un deuxième angle (β).

8. Dispositif de hachage et d'éparpillage (5) selon la revendication 6 et 7, **caractérisé en ce que** le premier angle (α) est plus grand que le deuxième angle (β).

9. Dispositif de hachage et d'éparpillage (5) selon une des revendications précédentes, **caractérisé en ce que** la première portion de guidage (22) présente sensiblement la forme d'un triangle équilatéral, et la deuxième portion de guidage (24) présente sensiblement la forme d'un trapèze.

10. Dispositif de hachage et d'éparpillage (5) selon une des revendications précédentes, **caractérisé en ce que** les branches de guidage de produit (29) de la deuxième portion de guidage (24) présentent une courbure (R) avec un tracé concave.

11. Moissonneuse-batteuse (1) comprenant un dispositif de hachage et d'éparpillage (5), **caractérisée en ce que** le dispositif de hachage et d'éparpillage (5) est conformé selon une des revendications 1 à 10.
